# EUROPÄISCHE PATENTANMELDUNG

(11) **EP 4 346 183 A1**
(43) Veröffentlichungstag der Anmeldung: **03.04.2024**
(21) Anmeldenummer: 22199091.4
(22) Anmeldetag: 30.09.2022
(51) Int. Cl.: H04L 47/72, H04L 47/80, H04L 47/783, G06F 9/455

(54) **VERFAHREN UND SYSTEM ZUR ÜBERMITTLUNG ZEITKRITISCHER DATEN INNERHALB EINES KOMMUNIKATIONSNETZES**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE)
(74) Vertreter: Siemens Patent Attorneys

(57) **Zusammenfassung**

Zur Übermittlung zeitkritischer Daten innerhalb eines Kommunikationsnetzes von bzw. zu Steuerungsanwendungen, die jeweils mittels zumindest einer Ablaufsteuerungskomponente (131-133) bereitgestellt werden, die in eine auf einem Host (100) installierte Ablaufsteuerungsumgebung (112) ladbar und dort ausführbar ist, wird den Ablaufsteuerungskomponenten jeweils zumindest ein virtueller Netzadapter (121-123) zugeordnet. Die Ablaufsteuerungskomponenten senden zur Reservierung von Ressourcen zum Senden bzw. Empfangen von zeitkritische Daten umfassenden Datenströmen jeweils einen Reservierungsauftrag (11) an ein der Ablaufsteuerungsumgebung zugeordnetes Reservierungsmodul (130). Das Reservierungsmodul sendet entsprechend zugeordneten Dienstgüteanforderungen jeweils eine Reservierungsanfrage (12a) oder -bestätigung (12b) an weiterleitende Kommunikationsgeräte (201-203) oder eine übergeordnete Steuerungseinheit (210). Außerdem veranlasst das Reservierungsmodul die Queue-Steuerungseinheit, dem virtuellen Netzadapter der jeweiligen Ablaufsteuerungskomponente entsprechend einer den Dienstgüteanforderungen zugeordneten Priorität Zugriff auf Sende-/Empfangsqueues eines physischen Netzadapters einzuräumen.

## Beschreibung

Die vorliegende Erfindung betrifft ein Verfahren zur Übermittlung zeitkritischer Daten innerhalb eines Kommunikationsnetzes, insbesondere innerhalb eines Kommunikationsnetzes eines industriellen Automatisierungssystems, und ein System, insbesondere einen Host, zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Aus der älteren europäischen Patentanmeldung mit dem Anmeldeaktenzeichen 22177736.0 ist ein Verfahren zur Bereitstellung von Steuerungsanwendungen mittels Ablaufsteuerungskomponenten für Steuerungsanwendungen bekannt, deren Ausführung ausgewählte Privilegien erfordert. Hierzu wird jeweils eine Spezifikation benötigter sicherheitskritischer Ressourcen erstellt. Anhand der Spezifikationen wird jeweils eine zusätzliche Ablaufsteuerungskomponente ermittelt, die für eine Bereitstellung eines Zugriffs auf die benötigten sicherheitskritischen Ressourcen vorgesehen ist. Dementsprechend wird eine Ausführung der jeweiligen Ablaufsteuerungskomponente gemeinsam mit der zusätzlichen Ablaufsteuerungskomponente gestartet. Durch eine Ablaufsteuerungsumgebung wird eine Schnittstelle zur Interprozesskommunikation zwischen der jeweiligen Ablaufsteuerungskomponente und der zusätzlichen Ablaufsteuerungskomponente eingerichtet. Der Zugriff auf die jeweils benötigten sicherheitskritischen Ressourcen wird mittels Interprozesskommunikation zwischen der jeweiligen Ablaufsteuerungskomponente und der zusätzlichen Ablaufsteuerungskomponente bereitgestellt.

Aufgrund einer zunehmend flexibleren funktionalen Ausgestaltung von industriellen Automatisierungsgeräten werden verstärkt in Automatisierungsgeräte nachladbare Steuerungsanwendungen genutzt. Diese Steuerungsanwendungen können beispielsweise mittels Container-Virtualisierung verfügbar gemacht werden. In industriellen Automatisierungssystem bestehen üblicherweise hohe Anforderungen hinsichtlich deterministischer Kommunikation mit definierten Quality-of-Service-Eigenschaften einerseits und in Bezug auf eine aufwandsarme Integration industrieller Steuerungsanwendungen andererseits.

Bisherige Standards zu Time-sensitive Networks tragen mittels Container-Virtualisierung implementierte Steuerungsanwendungen nur wenig Rechnung. Zwar ist in IEC 60802 ein "Industrial Profile" mit technischen Komponenten für Time-sensitive Networks für industrielle Automatisierungssysteme definiert. Jedoch werden mittels Container-Virtualisierung implementierte Steuerungsanwendungen dort weitgehend mit virtuellen Maschinen gleichgesetzt und Software-Container daher wie physikalische Endgeräte behandelt. Dies hat für Entwickler von mittels Container-Virtualisierung implementierten Steuerungsanwendungen zur Folge, dass komplexe Endgeräte-Software-Stacks in ihre Anwendungen integriert werden müssen. Hieraus resultieren wiederum hohe Kosten sowie Inbetriebnahme- und Wartungsaufwände.

Der vorliegenden Erfindung liegt daher die Aufgabe zugrunde, ein Verfahren zur Übermittlung zeitkritischer Daten innerhalb eines Kommunikationsnetzes zu schaffen, das auf Basis von Container-Virtualisierung eine aufwandsarme und zuverlässige Realisierung von Steuerungsanwendungen mit deterministischem Kommunikationseigenschaften ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 15 angegebenen Merkmalen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationsnetzes werden die zeitkritischen Daten von bzw. zu Steuerungsanwendungen übermittelt, die jeweils mittels zumindest einer Ablaufsteuerungskomponente bereitgestellt werden, die in eine auf einem Host installierte Ablaufsteuerungsumgebung ladbar und dort ausführbar ist. Dabei wird den Ablaufsteuerungskomponenten jeweils zumindest ein virtueller Netzadapter zugeordnet.

Vorzugsweise laufen die Ablaufsteuerungskomponenten innerhalb der Ablaufsteuerungsumgebung isoliert voneinander ab und nutzen gemeinsam einen Betriebssystemkern des Hosts. Insbesondere können die Ablaufsteuerungskomponenten Software-Container, WebAssembly- oder Java Bytecode sein bzw. umfassen. Darüber hinaus können die Ablaufsteuerungskomponenten auch Container-Gruppen umfassen, beispielsweise Pods. Grundsätzlich können für die Ablaufsteuerungskomponenten auch alternative Micro-Virtualisierungskonzepte, wie Snaps, verwendet werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft. Grundsätzlich können auch andere (orchestrierte) Container-Laufzeitumgebungen, wie podman oder Kubernetes, verwendet werden. Alternativ zu einer Container-Laufzeitumgebung kann für die Ablaufsteuerungsumgebung auch eine WebAssembly-Laufzeitumgebung oder eine Java Virtual Machine verwendet werden.

Den virtuellen Netzadaptern werden erfindungsgemäß durch eine Queue-Steuerungseinheit dynamisch Sende-/Empfangsqueues zumindest eines physischen Netzadapters des Hosts zugeordnet. Dabei umfasst der physische Netzadapter insbesondere eine PHY- und MAC-Komponente. Vorzugsweise werden den Ablaufsteuerungskomponenten die virtuellen Netzadapter durch die Queue-Steuerungseinheit jeweils innerhalb der Ablaufsteuerungsumgebung zugeordnet.

Die Ablaufsteuerungskomponenten senden zur Reservierung von Ressourcen zum Senden bzw. Empfangen von zeitkritische Daten umfassenden Datenströmen jeweils einen Reservierungsauftrag an ein der Ablaufsteuerungsumgebung zugeordnetes Reservierungsmodul. Das Reservierungsmodul sendet anhand den Ablaufsteuerungskomponenten zugeordneter Dienstgüteanforderungen jeweils eine Reservierungsanfrage oder -bestätigung an den jeweiligen Datenstrom weiterleitende Kommunikationsgeräte oder eine übergeordnete Steuerungseinheit des Kommunikationsnetzes zur Reservierung der Ressourcen.

Die Ressourcen zur Übermittlung der Datenströme umfassen insbesondere nutzbare Übertragungszeitfenster, Bandbreite, zugesicherte maximale Latenz, Queue-Anzahl, Queue-Cache bzw. Adress-Cache in Switches oder Bridges als weiterleitenden Kommunikationsgeräten. Eine Weiterleitung der Datenströme innerhalb des Kommunikationsnetzes wird beispielsweise mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper und/oder mittels Priority-Based Shaper gesteuert. Genannte Standards sind zur Implementierung von Time-sensitive Networks (TSN) spezifiziert.

Die Reservierungsanfrage oder -bestätigung kann insbesondere eine Talker Advertise, Talker Announce, Listener Ready oder Listener Join Nachricht sein. Außerdem werden die Dienstgüteanforderungen den Ablaufsteuerungskomponenten vorteilhafterweise jeweils anhand einer Klassifizierung ihrer jeweiligen Echtzeitanforderung zugeordnet. Dabei erfolgt die Klassifizierung der Ablaufsteuerungskomponenten beispielsweise auf Grundlage einer Klassifizierungsrichtlinie.

Das Reservierungsmodul die Queue-Steuerungseinheit veranlasst erfindungsgemäß, dem virtuellen Netzadapter der jeweiligen Ablaufsteuerungskomponente entsprechend einer den Dienstgüteanforderungen zugeordneten Priorität Zugriff auf die Sende-/ Empfangsqueues des physischen Netzadapters einzuräumen. Vorzugsweise werden die Ressourcen zur Übermittlung der Datenströme bei ausreichender Verfügbarkeit in den jeweiligen weiterleitenden Kommunikationsgeräten reserviert. Insbesondere veranlasst das Reservierungsmodul die Queue-Steuerungseinheit nur bei erfolgreicher Reservierung, dem virtuellen Netzadapter der jeweiligen Ablaufsteuerungskomponente Zugriff auf die Sende-/Empfangsqueues des physischen Netzadapters einzuräumen.

Mit der vorliegenden Erfindung entfällt eine Integration und Pflege von Software-Stacks insbesondere für Time-sensitive Networks in Container-basierte Steuerungsanwendungen. Durch das Reservierungsmodul und die Queue-Steuerungseinheit werden nämlich innerhalb der Ablaufsteuerungsumgebung für Container-basierte Steuerungsanwendungen einfach nutzbare Anwendungsschnittstellen bereitgestellt. Insgesamt ermöglicht dies eine einfache Verwendung von Hosts mit entsprechend virtualisierten Steuerungsanwendungen in Time-sensitive Networks und eine transparente Unterstützung unterschiedlicher Hardware-Konfigurationen je nach Leistungsanforderungen an das jeweilige Time-sensitive Network.

Entsprechend einer bevorzugten Ausgestaltung der vorliegenden Erfindung sendet das Reservierungsmodul die Reservierungsanfragen oder -bestätigungen jeweils entsprechend einem für die jeweilige Ablaufsteuerungskomponente ausgewählten Reservierungsprotokoll an die weiterleitenden Kommunikationsgeräte oder die übergeordnete Steuerungseinheit des Kommunikationsnetzes. Dabei kann das Reservierungsmodul das Reservierungsprotokoll beispielsweise anhand durch ein weiterleitendes Kommunikationsgerät, an das der Host angeschlossen ist, insbesondere entsprechend IEEE 802.1Q bereitgestellter Informationen bzw. anhand durch die übergeordnete Steuerungseinheit des Kommunikationsnetzes bereitgestellter Informationen auswählen. Da das Reservierungsmodul diese Funktionen für die jeweilige Steuerungsanwendung übernimmt, ist seitens der Steuerungsanwendungen eine Berücksichtigung von Spezifika zur Auswahl eines geeigneten Reservierungsprotokolls nicht mehr erforderlich.

Entsprechend einer weiteren bevorzugten Ausgestaltung der vorliegenden Erfindung schaltet die Queue-Steuerungseinheit bei einer Einräumung des Zugriffs auf die Sende-/Empfangsqueues des physischen Netzadapters Host-interne Hardware- bzw. Software-Schnittstellen zwischen dem jeweiligen virtuellen Netzadapter und zumindest einer ausgewählten Sende-/Empfangsqueue frei. Dabei erfasst die Queue-Steuerungseinheit zum Auswählen einer Sende-/Empfangsqueue und Freischalten der Hardware- bzw. Software-Schnittstellen bereits für eine Übermittlung von Datenströmen verwendete virtuelle Netzadapter und freigeschaltete Hardware- bzw. Software-Schnittstellen. Auf diese Weise ist eine schnelle, zuverlässige und bedarfsgerechte Zuordnung der Sende-/Empfangsqueues gewährleitet. Dementsprechend kann die Queue-Steuerungseinheit bei der Einräumung des Zugriffs auf die Sende-/Empfangsqueues jeweils verfügbare Sende-/Empfangsqueues und Hardware- bzw. Software-Schnittstellen für die Ablaufsteuerungskomponenten zur Übermittlung der Datenströme reservieren.

Insbesondere konfiguriert die Queue-Steuerungseinheit den physischen Netzadapter, dass reservierte Sende-/Empfangsqueues an den zugeordneten virtuellen Netzadaptern der Ablaufsteuerungskomponenten mit der Priorität zur Verfügung stehen, die der jeweiligen Ablaufsteuerungskomponente zugeordnet ist. Somit wird eine konsistente Allokierung von Hostinternen Ressourcen zum Senden bzw. Empfangen von priorisierten Datenströmen durch die Ablaufsteuerungskomponenten erzielt.

Vorteilhafterweise teilt die Queue-Steuerungseinheit dem Reservierungsmodul nach einer erfolgreichen Konfiguration des physischen Netzadapters jeweils für die Übermittlung der Datenströme zu verwendende virtuelle Netzadapter und Sende-/ Empfangsqueues mit. Das Reservierungsmodul sendet diese Informationen zur Bestätigung des Reservierungsauftrags an die jeweilige Ablaufsteuerungskomponente. Anhand der von der Bestätigung ihres jeweiligen Reservierungsauftrags umfassten Informationen können die Ablaufsteuerungskomponenten jeweils einen Datenstrom-Zugriffspunkt insbesondere als Socket anlegen und die Datenströme gezielt über die jeweils zu verwendenden virtuellen Netzadapter und Sende-/Empfangsqueues senden bzw. empfangen. Dies ermöglicht eine einfache und sichere Einrichtung von Datenströmen für die Ablaufsteuerungskomponenten. Vorzugsweise werden die virtuellen Netzadapter zum Senden bzw. Empfangen der Datenströme den Ablaufsteuerungskomponenten durch die Queue-Steuerungseinheit bei Bedarf zugeordnet und jeweils mit einer Funktionseinheit zur Implementierung eines Netzwerkprotokoll-Stacks der jeweiligen Ablaufsteuerungskomponente verbunden. Somit können Host-interne Ressourcen besonders effizient genutzt werden.

Datenströme sendende Kommunikationsgeräte bzw. Steuerungsanwendungen senden zur Bekanntmachung abonnierbarer Datenströme vorzugsweise jeweils einen Datenstrom-Identifikator umfassende erste Datagramme und spezifizieren in den ersten Datagrammen Dienstgüteanforderungen kennzeichnende Dienstgüteparameter für den jeweiligen Datenstrom. Demgegenüber senden Datenströme empfangende Kommunikationsgeräte bzw. Steuerungsanwendungen zur Reservierung von durch weiterleitende Kommunikationsgeräte für eine Übermittlung der Datenströme bereitzustellenden Ressourcen jeweils zweite Datagramme und spezifizieren in diesen den jeweiligen Datenstrom-Identifikator. Auf die ersten und zweiten Datagramme reservieren die weiterleitenden Kommunikationsgeräte jeweils bei ausreichender Verfügbarkeit Ressourcen zur Übermittlung der Datenströme entsprechend den spezifizierten Dienstgüteparametern. Dabei wird die Verfügbarkeit durch die übergeordnete Steuerungseinheit des Kommunikationsnetzes bzw. die weiterleitenden Kommunikationsgeräte überprüft. Dies ermöglicht ein hohes Maß an Konformität zu stehenden Standards für Time-sensitive Networks.

Das erfindungsgemäße System ist zur Durchführung eines Verfahrens entsprechend vorangehenden Ausführungen vorgesehen und umfasst eine auf einem Host installierte Ablaufsteuerungsumgebung sowie zumindest eine Ablaufsteuerungskomponente zur Bereitstellung einer Steuerungsanwendung. Die Ablaufsteuerungskomponente ist in die Ablaufsteuerungsumgebung ladbar und dort ausführbar. Außerdem umfasst das System eine Queue-Steuerungseinheit und ein der Ablaufsteuerungsumgebung zugeordnetes Reservierungsmodul. Das System ist dafür eingerichtet, dass zeitkritischen Daten von bzw. zu der Steuerungsanwendung übermittelt werden und dass der Ablaufsteuerungskomponente zumindest ein virtueller Netzadapter zugeordnet wird.

Die die Queue-Steuerungseinheit des erfindungsgemäßen Systems ist dafür eingerichtet, virtuellen Netzadaptern dynamisch Sende-/Empfangsqueues zumindest eines physischen Netzadapters des Hosts zuzuordnen. Des Weiteren ist die Ablaufsteuerungskomponente dafür eingerichtet, zur Reservierung von Ressourcen zum Senden bzw. Empfangen von zeitkritische Daten umfassenden Datenströmen jeweils einen Reservierungsauftrag an das Reservierungsmodul zu senden. Das Reservierungsmodul ist demgegenüber dafür eingerichtet, anhand Ablaufsteuerungskomponenten zugeordneter Dienstgüteanforderungen jeweils eine Reservierungsanfrage oder -bestätigung an den jeweiligen Datenstrom weiterleitende Kommunikationsgeräte oder eine übergeordnete Steuerungseinheit eines Kommunikationsnetzes zur Reservierung der Ressourcen zu senden. Ferner ist das Reservierungsmodul dafür eingerichtet, die Queue-Steuerungseinheit zu veranlassen, dem virtuellen Netzadapter der jeweiligen Ablaufsteuerungskomponente entsprechend einer den Dienstgüteanforderungen zugeordneten Priorität Zugriff auf die Sende-/ Empfangsqueues des physischen Netzadapters einzuräumen.

Entsprechend einer vorteilhaften Ausgestaltung des erfindungsgemäßen Systems umfasst dieses ein Kommunikationsnetz mit mehreren Kommunikationsgeräten. Außerdem sind die Ablaufsteuerungskomponenten dafür eingerichtet, innerhalb der Ablaufsteuerungsumgebung isoliert voneinander abzulaufen und gemeinsam einen Betriebssystemkern des Hosts zu nutzen. Vorzugsweise ist die Queue-Steuerungseinheit dafür eingerichtet, den Ablaufsteuerungskomponenten die virtuellen Netzadapter jeweils innerhalb der Ablaufsteuerungsumgebung zuzuordnen. Schließlich ist das Kommunikationsnetz dafür eingerichtet, die Ressourcen zur Übermittlung der Datenströme bei ausreichender Verfügbarkeit in den jeweiligen weiterleitenden Kommunikationsgeräten zu reservieren. Insgesamt ermöglicht dies sowohl Host-intern als auch Kommunikationsnetz-weit eine konsistente Zuteilung von Ressourcen zum Senden bzw. Empfangen von Datenströmen durch Ablaufsteuerungskomponenten.

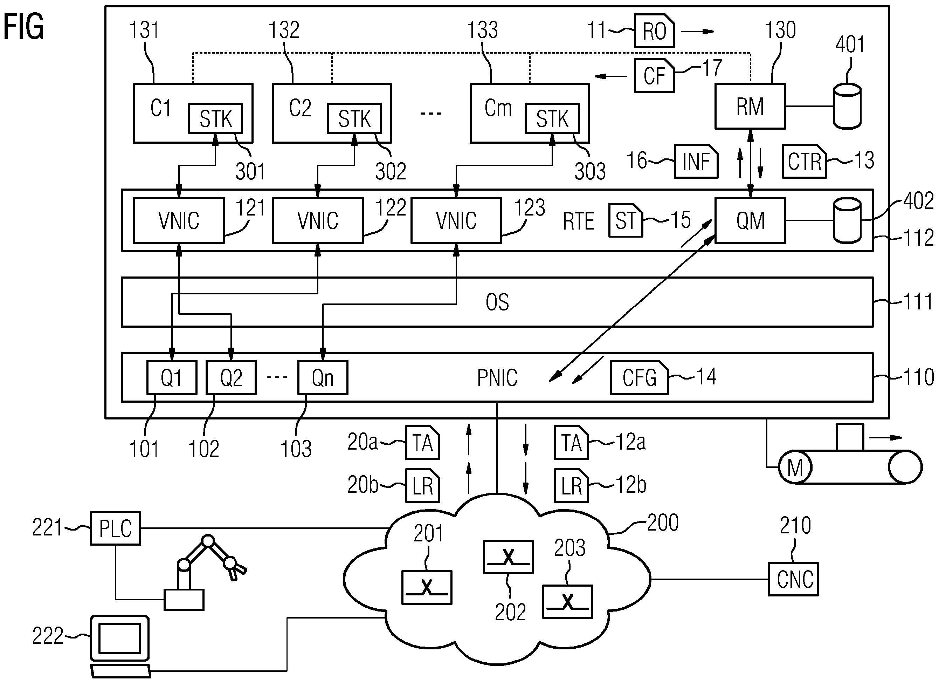

Die vorliegende Erfindung wird nachfolgend an einem Ausführungsbeispiel anhand der Zeichnung näher erläutert. Es zeigt die
- Figur: ein System zur Übermittlung zeitkritischer Daten innerhalb eines Kommunikationsnetzes von bzw. zu Steuerungsanwendungen, die mittels Ablaufsteuerungskomponenten bereitgestellt werden.

Das in der Figur dargestellte System umfasst einen Host 100 zur Bereitstellung von Steuerungsanwendungen eines industriellen Automatisierungssystems mittels Ablaufsteuerungskomponenten 131-133, die im vorliegenden Ausführungsbeispiel durch Software-Container implementiert sind. Die Steuerungsanwendungen des industriellen Automatisierungssystems sind exemplarisch für zeitkritische Dienste und können auch Überwachungsfunktionen umfassen. Darüber hinaus umfasst das System ein Kommunikationsnetz 200 mit mehreren Daten weiterleitenden Kommunikationsgeräten 201-203, insbesondere Switche, mehreren Endgeräten 221-222, beispielsweise speicherprogrammierbare Steuerungen oder Bedien- und Beobachtungsstationen, und einer übergeordneten Steuerungseinheit 210, wie einem Central Network Controller.

Der Host 100 kann mittels der Steuerungsanwendungen beispielsweise Funktionen von Steuerungsgeräten eines industriellen Automatisierungssystems, wie speicherprogrammierbaren Steuerungen, oder von Feldgeräten, wie Sensoren oder Aktoren, implementieren. Auf diese Weise kann der Host 100 insbesondere für einen Austausch von Steuerungs- und Messgrößen mit durch den Host 100 gesteuerten Maschinen oder Vorrichtungen genutzt werden. Dabei kann der Host 100 aus erfassten Messgrößen geeignete Steuerungsgrößen für die Maschinen oder Vorrichtungen ermitteln.

Alternativ oder zusätzlich kann der Host 100 mittels der Steuerungsanwendungen Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann der Host 100 zur Anzeige von Werten eines Regelungskreises und zur Veränderung von Regelungsparametern oder -programmen verwendet werden.

Die den Steuerungsanwendungen zugeordneten Ablaufsteuerungskomponenten 131-133 sind in eine Ablaufsteuerungsumgebung 112 ladbare sowie dort ausführbar. Die Ablaufsteuerungsumgebung 112 wird mittels des Hosts 100 bereitgestellt und ist dort auf als Anwendung auf einem Betriebssystem 111 des Hosts 100 installiert. Im vorliegenden Ausführungsbeispiel sind bzw. umfassen die Ablaufsteuerungskomponenten 131-133 Software-Container, die jeweils von anderen Software-Containern, Container-Gruppen bzw. Pods isoliert innerhalb der Ablaufsteuerungsumgebung 112 ablaufen. Dabei nutzen die Software-Container jeweils gemeinsam mit anderen auf dem Host 100 ablaufenden Software-Containern einen Kernel des Betriebssystems 111 des Hosts 100. Die Ablaufsteuerungsumgebung 112 ist insbesondere eine Container-Engine, durch die ein Anlegen, Löschen bzw. Verknüpfen von virtuellen Ressourcen erfolgt. Dabei können die virtuellen Ressourcen Software-Container, virtuelle Kommunikationsnetze und diesen zugeordnete Verbindungen umfassen.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Zur Übermittlung zeitkritischer Daten innerhalb des Kommunikationsnetzes 200, die von bzw. zu den Steuerungsanwendungen übermittelt werden, die mittels der Ablaufsteuerungskomponente 131-133 bereitgestellt werden, wird den Ablaufsteuerungskomponenten 131-133 durch eine Queue-Steuerungseinheit 120 jeweils ein virtueller Netzadapter 121-123 innerhalb der Ablaufsteuerungsumgebung 112 zugeordnet. Den virtuellen Netzadaptern 121-123 werden durch die Queue-Steuerungseinheit 120 wiederum dynamisch Sende-/Empfangsqueues 101-103 eines physischen Netzadapters 110 des Hosts 100 zugeordnet. Die virtuellen Netzadapter 121-123 können beispielsweise als Virtual Functions (VFs) im Rahmen von Single Root I/O Virtualization (SR-IOV) ausgeführt sein. Alternativ hierzu können die virtuellen Netzadapter 121-123 je nach Netzadapter-Hardware und gewählter Virtualisierungslösung auch als PCIe Scalable Functions oder Sub-functions (SFs) realisiert sein.

Die Ablaufsteuerungskomponenten 131-133 senden zur Reservierung von Ressourcen zum Senden bzw. Empfangen von zeitkritische Daten umfassenden Datenströmen (Streams) jeweils einen Reservierungsauftrag 11 an ein der Ablaufsteuerungsumgebung 112 zugeordnetes Reservierungsmodul 130. Die Ressourcen zur Übermittlung der Datenströme umfassen insbesondere nutzbare Übertragungszeitfenster, Bandbreite, zugesicherte maximale Latenz, Queue-Anzahl, Queue-Cache bzw. Adress-Cache in den Switchen 201-203 des Kommunikationsnetzes 200. Dabei kann eine Weiterleitung der Datenströme innerhalb des Kommunikationsnetzes 200 insbesondere mittels Frame Preemption gemäß IEEE 802.1Q, Time-Aware Shaper gemäß IEEE 802.1Q, Credit-Based Shaper gemäß IEEE 802.1Q, Burst Limiting Shaper, Peristaltic Shaper bzw. Priority-Based Shaper gesteuert werden.

Anhand den Ablaufsteuerungskomponenten 131-133 zugeordneter Dienstgüteanforderungen sendet das Reservierungsmodul 130 jeweils eine Reservierungsanfrage 12a oder Reservierungsbestätigung 12b an den jeweiligen Datenstrom weiterleitende Kommunikationsgeräte 201-203 oder die übergeordnete Steuerungseinheit 210 des Kommunikationsnetzes 200 zur Reservierung der Ressourcen. Im vorliegenden Ausführungsbeispiel werden den Ablaufsteuerungskomponenten 131-133 die Dienstgüteanforderungen jeweils anhand einer Klassifizierung ihrer jeweiligen Echtzeitanforderung zugeordnet. Diese Klassifizierung der Ablaufsteuerungskomponenten 131-133 erfolgt durch das Registrierungsmodul 130 auf Grundlage einer Klassifizierungsrichtlinie, die in einer dem Registrierungsmodul 130 zugeordneten Datenbank 401 hinterlegt ist.

Das Reservierungsmodul 130 sendet die Reservierungsanfragen 12a oder Reservierungsbestätigungen 12b jeweils entsprechend einem für die jeweilige Ablaufsteuerungskomponente 131-133 ausgewählten Reservierungsprotokoll an die weiterleitenden Kommunikationsgeräte 201-203 oder die übergeordnete Steuerungseinheit 210 des Kommunikationsnetzes. Vorzugsweise wählt das Reservierungsmodul 130 das Reservierungsprotokoll anhand durch ein weiterleitendes Kommunikationsgerät 201-203, an das der Host 100 angeschlossen ist, entsprechend IEEE 802.1Q bereitgestellter Informationen bzw. anhand durch die übergeordnete Steuerungseinheit 210 des Kommunikationsnetzes 200 bereitgestellter Informationen aus.

Im vorliegenden Ausführungsbeispiel senden Talker als Datenströme sendende Kommunikationsgeräte bzw. Steuerungsanwendungen zur Bekanntmachung abonnierbarer Datenströme jeweils einen Datenstrom-Identifikator umfassende Talker Advertise Nachrichten 12a, 20a und spezifizieren in diesen Nachrichten Dienstgüteanforderungen kennzeichnende Dienstgüteparameter für den jeweiligen Datenstrom. Demgegenüber senden Listener als Datenströme empfangende Kommunikationsgeräte bzw. Steuerungsanwendungen zur Reservierung von durch die weiterleitenden Kommunikationsgeräte 201-203 für eine Übermittlung der Datenströme bereitzustellenden Ressourcen jeweils Listener Ready Nachrichten 12b, 20b und spezifizieren in diesen Nachrichten den jeweiligen Datenstrom-Identifikator.

Die weiterleitenden Kommunikationsgeräte 201-203 reservieren auf die Talker Advertise Nachrichten 12a, 20a und die Listener Ready Nachrichten 12b, 20b jeweils bei ausreichender Verfügbarkeit Ressourcen zur Übermittlung der Datenströme entsprechend den spezifizierten Dienstgüteparametern. Dabei wird die Verfügbarkeit erforderlicher Ressourcen entlang für die Übermittlung der Datenströme in Frage kommender Pfade durch die übergeordnete Steuerungseinheit 210 des Kommunikationsnetzes bzw. die weiterleitenden Kommunikationsgeräte überprüft. Dies ist davon abhängig, ob ein zentrales oder dezentrales Stream-Reservierungsmodell verwendet wird. In jedem Fall ist das Kommunikationsnetz 200 dafür eingerichtet, die Ressourcen zur Übermittlung der Datenströme bei ausreichender Verfügbarkeit in den jeweiligen weiterleitenden Kommunikationsgeräten 201-203 zu reservieren.

Das Reservierungsmodul 130 veranlasst die Queue-Steuerungseinheit 120 mittels eines Steuerungsbefehls 13, dem virtuellen Netzadapter 121-123 der jeweiligen Ablaufsteuerungskomponente 131-133 entsprechend einer den Dienstgüteanforderungen zugeordneten Priorität Zugriff auf die Sende-/Empfangsqueues 101-103 des physischen Netzadapters 110 einzuräumen. Vorteilhafterweise veranlasst das Reservierungsmodul 130 die Queue-Steuerungseinheit 120 nur bei erfolgreicher Reservierung der Ressourcen im Kommunikationsnetz 200, dem virtuellen Netzadapter 121-123 der jeweiligen Ablaufsteuerungskomponente 131-133 Zugriff auf die Sende-/Empfangsqueues 101-103 des physischen Netzadapters 110 einzuräumen.

Die Queue-Steuerungseinheit 120 schaltet bei einer Einräumung des Zugriffs auf die Sende-/Empfangsqueues 101-103 des physischen Netzadapters 110 Host-interne Hardware- bzw. Software-Schnittstellen 501-503 zwischen dem jeweiligen virtuellen Netzadapter 121-123 und zumindest einer ausgewählten Sende-/ Empfangsqueue 101-103 frei. Zum Auswählen einer Sende-/Empfangsqueue 101-103 und Freischalten der Hardware- bzw. Software-Schnittstellen 501-503 erfasst die Queue-Steuerungseinheit bereits für eine Übermittlung von Datenströmen verwendete virtuelle Netzadapter 121-123 und freigeschaltete Hardware- bzw. Software-Schnittstellen 501-503. Dies protokolliert die Queue-Steuerungseinheit 120 in einer zugeordneten Datenbank 402. In dieser Datenbank 402 können insbesondere auch Beschreibungen verfügbarer Hardware-Funktionen des physischen Netzadapters 110 und Informationen über eine Zuteilung der Sende-/Empfangsqueues 101-103 zu Gruppen sowie über Mengengerüste möglicher virtueller Schnittstellen pro physischem Netzadapter hinterlegt sein.

Die Queue-Steuerungseinheit reserviert bei der Einräumung des Zugriffs auf die Sende-/Empfangsqueues 101-103 jeweils verfügbare Sende-/Empfangsqueues 101-103 und Hardware- bzw. Software-Schnittstellen 501-503 für die Ablaufsteuerungskomponenten 131-133 zur Übermittlung der Datenströme. Außerdem konfiguriert die Queue-Steuerungseinheit 120 den physischen Netzadapter 110 mittels eines Konfigurationsbefehls 14 dafür, dass reservierte Sende-/Empfangsqueues an den zugeordneten virtuellen Netzadaptern der Ablaufsteuerungskomponenten mit der Priorität zur Verfügung stehen, die der jeweiligen Ablaufsteuerungskomponente zugeordnet ist. Nach erfolgreicher Konfiguration des physischen Netzadapters 110 sendet dieser eine Statusinformation 15 zur Bestätigung an die Queue-Steuerungseinheit 120 zurück.

Die Queue-Steuerungseinheit 120 teilt dem Reservierungsmodul 130 nach einer erfolgreichen Konfiguration des physischen Netzadapters jeweils mittels einer Antwortnachricht 15 für die Übermittlung der Datenströme zu verwendende virtuelle Netzadapter 121-123 und Sende-/Empfangsqueues 101-103 mit. Das Reservierungsmodul sendet diese Informationen 17 zur Bestätigung des Reservierungsauftrags 11 an die jeweilige Ablaufsteuerungskomponente 131-133. Die Ablaufsteuerungskomponenten 131-133 legen anhand der von der Bestätigung ihres jeweiligen Reservierungsauftrags 11 umfassten Informationen jeweils einen Datenstrom-Zugriffspunkt insbesondere als Socket anl und senden bzw. empfangen die Datenströme gezielt über die jeweils zu verwendenden virtuellen Netzadapter 121-123 und Sende-/Empfangsqueues 101-103. Vorzugsweise werden die virtuellen Netzadapter 121-123 zum Senden bzw. Empfangen der Datenströme den Ablaufsteuerungskomponenten 131-133 durch die Queue-Steuerungseinheit 120 bei Bedarf zugeordnet und jeweils mit einer Funktionseinheit 301-303 zur Implementierung eines Netzwerkprotokoll-Stacks der jeweiligen Ablaufsteuerungskomponente 131-133 verbunden.

## Patentansprüche

1. Verfahren zur Übermittlung zeitkritischer Daten innerhalb eines Kommunikationsnetzes, bei dem
- die zeitkritischen Daten von und/oder zu Steuerungsanwendungen übermittelt werden, die jeweils mittels zumindest einer Ablaufsteuerungskomponente (131-133) bereitgestellt werden, die in eine auf einem Host (100) installierte Ablaufsteuerungsumgebung (112) ladbar und dort ausführbar ist, wobei den Ablaufsteuerungskomponenten jeweils zumindest ein virtueller Netzadapter (121-123) zugeordnet wird,
- den virtuellen Netzadaptern durch eine Queue-Steuerungseinheit (120) dynamisch Sende-/Empfangsqueues (101-103) zumindest eines physischen Netzadapters (110) des Hosts zugeordnet werden,
- die Ablaufsteuerungskomponenten zur Reservierung von Ressourcen zum Senden und/oder Empfangen von zeitkritische Daten umfassenden Datenströmen jeweils einen Reservierungsauftrag (11) an ein der Ablaufsteuerungsumgebung zugeordnetes Reservierungsmodul (130) senden,
- das Reservierungsmodul anhand den Ablaufsteuerungskomponenten zugeordneter Dienstgüteanforderungen jeweils eine Reservierungsanfrage (12a) oder -bestätigung (12b) an den jeweiligen Datenstrom weiterleitende Kommunikationsgeräte (201-203) oder eine übergeordnete Steuerungseinheit (210) des Kommunikationsnetzes (200) zur Reservierung der Ressourcen sendet,
- das Reservierungsmodul die Queue-Steuerungseinheit veranlasst, dem virtuellen Netzadapter der jeweiligen Ablaufsteuerungskomponente entsprechend einer den Dienstgüteanforderungen zugeordneten Priorität Zugriff auf die Sende-/Empfangsqueues des physischen Netzadapters einzuräumen.

2. Verfahren nach Anspruch 1,
bei dem die Ablaufsteuerungskomponenten (131-133) innerhalb der Ablaufsteuerungsumgebung (112) isoliert voneinander ablaufen und gemeinsam einen Betriebssystemkern (111) des Hosts (100) nutzen, bei dem den Ablaufsteuerungskomponenten die virtuellen Netzadapter (121-123) durch die Queue-Steuerungseinheit (120) jeweils innerhalb der Ablaufsteuerungsumgebung zugeordnet werden und bei dem die Ressourcen zur Übermittlung der Datenströme bei ausreichender Verfügbarkeit in den jeweiligen weiterleitenden Kommunikationsgeräten (201-203) reserviert werden.

3. Verfahren nach Anspruch 2,
bei dem die Ablaufsteuerungskomponenten Software-Container, WebAssembly- oder Java Bytecode sind und bei dem die Ablaufsteuerungsumgebung eine Container-Laufzeitumgebung, eine WebAssembly-Laufzeitumgebung oder eine Java Virtual Machine ist.

4. Verfahren nach einem der Ansprüche 1 bis 3,
bei dem die Dienstgüteanforderungen den Ablaufsteuerungskomponenten jeweils anhand einer Klassifizierung ihrer jeweiligen Echtzeitanforderung zugeordnet werden und bei dem die Klassifizierung der Ablaufsteuerungskomponenten auf Grundlage einer Klassifizierungsrichtlinie erfolgt.

5. Verfahren nach einem der Ansprüche 1 bis 4,
bei dem das Reservierungsmodul die Reservierungsanfragen oder -bestätigungen jeweils entsprechend einem für die jeweilige Ablaufsteuerungskomponente ausgewählten Reservierungsprotokoll an die weiterleitenden Kommunikationsgeräte oder die übergeordnete Steuerungseinheit des Kommunikationsnetzes sendet.

6. Verfahren nach Anspruch 5,
bei dem das Reservierungsmodul das Reservierungsprotokoll anhand durch ein weiterleitendes Kommunikationsgerät, an das der Host angeschlossen ist, insbesondere entsprechend IEEE 802.1Q bereitgestellter Informationen und/oder anhand durch die übergeordnete Steuerungseinheit des Kommunikationsnetzes bereitgestellter Informationen auswählt.

7. Verfahren nach einem der Ansprüche 1 bis 6,
bei dem die Queue-Steuerungseinheit (120) bei einer Einräumung des Zugriffs auf die Sende-/Empfangsqueues (101-103) des physischen Netzadapters (110) Host-interne Hardware- und/oder Software-Schnittstellen (501-503) zwischen dem jeweiligen virtuellen Netzadapter (121-123) und zumindest einer ausgewählten Sende-/Empfangsqueue (101-103) freischaltet und bei dem die Queue-Steuerungseinheit zum Auswählen einer Sende-/ Empfangsqueue und Freischalten der Hardware- und/oder Software-Schnittstellen bereits für eine Übermittlung von Datenströmen verwendete virtuelle Netzadapter und freigeschaltete Hardware- und/oder Software-Schnittstellen erfasst.

8. Verfahren nach Anspruch 7,
bei dem die Queue-Steuerungseinheit bei der Einräumung des Zugriffs auf die Sende-/Empfangsqueues jeweils verfügbare Sende-/Empfangsqueues und Hardware- und/oder Software-Schnittstellen für die Ablaufsteuerungskomponenten zur Übermittlung der Datenströme reserviert und bei dem die Queue-Steuerungseinheit den physischen Netzadapter konfiguriert, dass reservierte Sende-/Empfangsqueues an den zugeordneten virtuellen Netzadaptern der Ablaufsteuerungskomponenten mit der Priorität zur Verfügung stehen, die der jeweiligen Ablaufsteuerungskomponente zugeordnet ist.

9. Verfahren nach Anspruch 8,
bei dem die Queue-Steuerungseinheit (120) dem Reservierungsmodul (130) nach einer erfolgreichen Konfiguration des physischen Netzadapters (110) jeweils für die Übermittlung der Datenströme zu verwendende virtuelle Netzadapter (121-123) und Sende-/Empfangsqueues (101-103) mitteilt, bei dem das Reservierungsmodul diese Informationen (17) zur Bestätigung des Reservierungsauftrags (11) an die jeweilige Ablaufsteuerungskomponente (131-133) sendet, bei dem die Ablaufsteuerungskomponenten anhand der von der Bestätigung ihres jeweiligen Reservierungsauftrags umfassten Informationen jeweils einen Datenstrom-Zugriffspunkt insbesondere als Socket anlegen und bei dem die Ablaufsteuerungskomponenten die Datenströme gezielt über die jeweils zu verwendenden virtuellen Netzadapter und Sende-/Empfangsqueues senden und/oder empfangen.

10. Verfahren nach einem der Ansprüche 1 bis 9,
bei dem die virtuellen Netzadapter (121-123) zum Senden und/oder Empfangen der Datenströme den Ablaufsteuerungskomponenten (131-133) durch die Queue-Steuerungseinheit (120) bei Bedarf zugeordnet und jeweils mit einer Funktionseinheit (301-3033) zur Implementierung eines Netzwerkprotokoll-Stacks der jeweiligen Ablaufsteuerungskomponente verbunden werden.

11. Verfahren nach einem der Ansprüche 1 bis 10,
bei dem das Reservierungsmodul die Queue-Steuerungseinheit nur bei erfolgreicher Reservierung veranlasst, dem virtuellen Netzadapter der jeweiligen Ablaufsteuerungskomponente Zugriff auf die Sende-/Empfangsqueues des physischen Netzadapters einzuräumen.

12. Verfahren nach einem der Ansprüche 1 bis 11,
bei dem Datenströme sendende Kommunikationsgeräte und/oder Steuerungsanwendungen zur Bekanntmachung abonnierbarer Datenströme jeweils einen Datenstrom-Identifikator umfassende erste Datagramme (12a, 20a) senden und in den ersten Datagrammen Dienstgüteanforderungen kennzeichnende Dienstgüteparameter für den jeweiligen Datenstrom spezifizieren, bei dem Datenströme empfangende Kommunikationsgeräte und/oder Steuerungsanwendungen zur Reservierung von durch weiterleitende Kommunikationsgeräte (201-203) für eine Übermittlung der Datenströme bereitzustellenden Ressourcen jeweils zweite Datagramme (12b, 20b) senden und in diesen den jeweiligen Datenstrom-Identifikator spezifizieren und bei dem die weiterleitenden Kommunikationsgeräte auf die ersten und zweiten Datagramme jeweils bei ausreichender Verfügbarkeit Ressourcen zur Übermittlung der Datenströme entsprechend den spezifizierten Dienstgüteparametern reservieren, wobei die Verfügbarkeit durch die übergeordnete Steuerungseinheit (210) des Kommunikationsnetzes (200) und/oder die weiterleitenden Kommunikationsgeräte (201-203) überprüft wird.

13. Verfahren nach einem der Ansprüche 1 bis 12,
bei dem die Ressourcen zur Übermittlung der Datenströme nutzbare Übertragungszeitfenster, Bandbreite, zugesicherte maximale Latenz, Queue-Anzahl, Queue-Cache und/oder Adress-Cache in Switches oder Bridges umfassen.

14. Verfahren nach Anspruch 13,
bei dem eine Weiterleitung der Datenströme innerhalb des Kommunikationsnetzes mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper und/oder mittels Priority-Based Shaper gesteuert wird.

15. System zur Durchführung eines Verfahrens nach einem der Ansprüche 1 bis 14 mit
- einer auf einem Host (100) installierten Ablaufsteuerungsumgebung (112),
- zumindest einer Ablaufsteuerungskomponente (131-133) zur Bereitstellung einer Steuerungsanwendung, wobei die Ablaufsteuerungskomponente in die Ablaufsteuerungsumgebung (112) ladbar und dort ausführbar ist,
- einer Queue-Steuerungseinheit (120),
- einem der Ablaufsteuerungsumgebung zugeordneten Reservierungsmodul (130),
- wobei das System dafür eingerichtet ist, dass zeitkritischen Daten von und/oder zu der Steuerungsanwendung übermittelt werden und dass der Ablaufsteuerungskomponente zumindest ein virtueller Netzadapter (121-123) zugeordnet wird,
- wobei die Queue-Steuerungseinheit dafür eingerichtet ist, virtuellen Netzadaptern dynamisch Sende-/Empfangsqueues (101-103) zumindest eines physischen Netzadapters (110) des Hosts zuzuordnen,
- wobei die Ablaufsteuerungskomponente dafür eingerichtet ist, zur Reservierung von Ressourcen zum Senden und/oder Empfangen von zeitkritische Daten umfassenden Datenströmen jeweils einen Reservierungsauftrag (11) an das Reservierungsmodul zu senden,
- wobei das Reservierungsmodul dafür eingerichtet ist, anhand Ablaufsteuerungskomponenten zugeordneter Dienstgüteanforderungen jeweils eine Reservierungsanfrage (12a) oder -bestätigung (12b) an den jeweiligen Datenstrom weiterleitende Kommunikationsgeräte (201-203) oder eine übergeordnete Steuerungseinheit (210) eines Kommunikationsnetzes (200) zur Reservierung der Ressourcen zu senden,
- wobei das Reservierungsmodul ferner dafür eingerichtet ist, die Queue-Steuerungseinheit zu veranlassen, dem virtuellen Netzadapter der jeweiligen Ablaufsteuerungskomponente entsprechend einer den Dienstgüteanforderungen zugeordneten Priorität Zugriff auf die Sende-/Empfangsqueues des physischen Netzadapters einzuräumen.

16. System nach Anspruch 15,
bei dem das System ein Kommunikationsnetz (200) mit mehreren Kommunikationsgeräten (201-203, 221-222) umfasst, bei dem die Ablaufsteuerungskomponenten (131-133) dafür eingerichtet sind, innerhalb der Ablaufsteuerungsumgebung (112) isoliert voneinander abzulaufen und gemeinsam einen Betriebssystemkern (111) des Hosts (110) zu nutzen, bei dem die die Queue-Steuerungseinheit (120) dafür eingerichtet ist, den Ablaufsteuerungskomponenten die virtuellen Netzadapter (121-123) jeweils innerhalb der Ablaufsteuerungsumgebung zuzuordnen und bei dem das Kommunikationsnetz dafür eingerichtet ist, die Ressourcen zur Übermittlung der Datenströme bei ausreichender Verfügbarkeit in den jeweiligen weiterleitenden Kommunikationsgeräten (201-203) zu reservieren.
